# EUROPEAN PATENT SPECIFICATION

(11) **EP 3 279 489 B1**
(45) Date of publication and mention of the grant of the patent: **20.11.2019**
(21) Application number: 16772264.4
(22) Date of filing: 15.03.2016
(51) Int. Cl.: F16C 32/06, F16C 29/02, F16C 33/74, F16J 15/02, F16J 15/08

(54) **STATIC PRESSURE GAS BEARING**
GASLAGER MIT STATISCHEM DRUCK
PALIER À GAZ À PRESSION STATIQUE

(30) Priority: 31.03.2015 JP 2015072097
(43) Date of publication of application: 07.02.2018
(73) Proprietor: Sumitomo Heavy Industries, Ltd., Tokyo 141-6025 (JP)
(72) Inventor: YOSHIDA, Tatsuya, Yokosuka-shi Kanagawa 237-8555 (JP); SAKAKI, Kazutoshi, Tokyo 141-6025 (JP)
(74) Representative: Louis Pöhlau Lohrentz
(86) International application number: PCT/JP2016/058132
(87) International publication number: WO 2016/158381

(56) References cited:
- JP-A- H03 242 386
- JP-A- H03 242 386
- JP-A- S62 180 114
- JP-A- 2004 028 214
- JP-U- H0 221 328
- US-A- 3 263 025
- US-A- 5 921 559

## Description

### Technical Field

The present invention relates to a static pressure gas bearing which is used in a vacuum environment.

### Background Art

In a bearing which is used in a vacuum environment, it is required not to contaminate the inside of a vacuum chamber. As the bearing, a static pressure gas bearing is known. The static pressure gas bearing is configured such that a slider can smoothly move with respect to a guide shaft by ejecting compressed gas from an air pad provided inside the slider. The static pressure gas bearing has an advantage that fine dust is not generated from lubricating oil or a sliding surface unlike a rolling bearing or a linear guide.

In a case where the slider is formed by joining plate materials, it is important to prevent the compressed gas supplied into the slider from leaking from the joint surface between the plate materials such that a degree of vacuum inside a vacuum chamber does not greatly decrease. For example, PTL 1 discloses that a solvent having high airtight retention properties is applied to a gap between plates of a movable body configured of a top plate, a bottom plate, and a side plate. In addition, PTL 2 discloses that, as a sealing agent, an adhesive is sealed to and cured on the fastening surface of a moving body formed by fastening a top plate, a bottom plate, and a side plate to each other by bolts.

### Citation List

PTL 1: Japanese Unexamined Patent Application Publication No. 2004-28214
PTL 2: Japanese Unexamined Patent Application Publication No. 2002-333022

### Summary of Invention

### Technical Problem

Like PTL 1, in a case where the solvent is applied to the gap between the plates, there is a problem that sealing effects decrease due to aged deterioration of the solvent or deteriorated solvent is detached from the gap to become fine dust. Moreover, like PTL 2, if the plates are adhered to each other by the adhesive, there is a problem that it is difficult to disassemble the moving body for maintenance or adjustment.

The present invention is made in consideration of the above-described circumstances, and an object thereof is to provide a technology of decreasing or preventing leakage of gas from a j oint surface of plate-shaped members configuring a slider in a static pressure gas bearing used in a vacuum environment. Solution to Problem

According to an aspect of the present invention, there is provided a static pressure gas bearing including: a guide shaft; and a tubular slider which is movable in an axial direction in a state where the guide shaft is accommodated therein. The slider is configured by fastening a plurality of plate-shaped members, and a film formed of a soft material having a smaller elastic modulus than that of each of the plate-shaped members is interposed between joint surfaces of the plate-shaped members.

According to this aspect, when the plate-shaped members are fastened to each other by bolts, the film which is softer than the plate-shaped member collapses to fill the gap between the joint surfaces. Therefore, it is possible to decrease or prevent leakage of gas from the joint surfaces by only the fastening without an adhesive, a solvent, or the like.

The plate-shaped member may be formed of ceramics and the film is formed by vapor deposition of aluminum. Accordingly, it is possible to easily form the film on the joint surface of the plate-shaped member.

In addition, aspects of the present invention include arbitrary combinations of the above-described elements and mutual substitution of elements or expressions of the present invention among apparatuses, methods, systems, or the like. Advantageous Effects of Invention

According to the present invention, in the static pressure gas bearing used in a vacuum environment, it is possible to decrease or prevent leakage of gas from the joint surface of the plate-shaped member configuring the slider.

### Brief Description of Drawings

Fig. 1 is a schematic perspective view showing a static pressure gas bearing according to an embodiment of the present invention.
Fig. 2 is a perspective view of a slider configuring the static pressure gas bearing.
Fig. 3 is a view explaining an operation principle of the static pressure gas bearing.
Fig. 4 is a graph showing a leakage amount of air from the slider according to Example.

### Description of Embodiments

Hereinafter, the same reference numerals are assigned to the same or equivalent components or members shown in the drawings, and overlapping descriptions thereof are appropriately omitted. In addition, dimensions of the members in each drawing are appropriately enlarged or reduced for easy understanding. Moreover, in each drawing, some of the members which are not important in descriptions of embodiments are omitted.

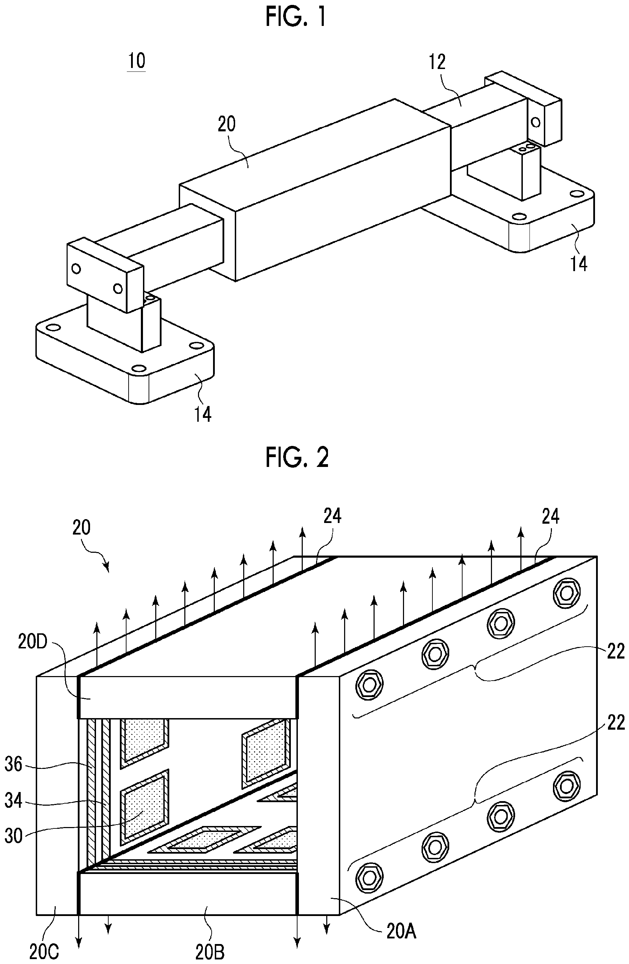

Fig. 1 is a schematic perspective view showing a static pressure gas bearing 10 according to an embodiment of the present invention. The static pressure gas bearing 10 is configured of a guide shaft 12 which extends in one direction and a tubular slider 20 which is movable in an axial direction along the guide shaft 12 in a state where the guide shaft 12 is accommodated therein. Both ends of the guide shaft 12 are supported by foot stands 14.

The slider 20 is attached to have a slight gap with respect to the guide shaft 12. As described in detail later, a compressed gas (for example, air) is ejected from an air pad provided inside the slider 20, and thus, the slider 20 can smoothly move along the guide shaft 12.

For example, the static pressure gas bearing 10 is used to drive a movable stage in an apparatus which is operated in a vacuum chamber such as an electron beam exposure apparatus. In a case where the static pressure gas bearing 10 is used along with the electron beam exposure apparatus, if the static pressure gas bearing is formed of a magnetic material, there is a concern that the static pressure gas bearing may affect trajectories of electron beams. Accordingly, the guide shaft 12, the foot stands 14, and the slider 20 are formed of a nonmagnetic material, for example, ceramics.

For example, compared to a slider which uses a rolling bearing or a linear guide, in the static pressure gas bearing 10, fine dust is not generated from a solvent such as lubricating oil or a sliding surface, and thus, the static pressure gas bearing 10 is particularly suitable for use in a vacuum environment.

Fig. 2 is a perspective view showing the slider 20. The slider 20 is formed in a tubular shape having a rectangular cross section and is configured by combining four plate-shaped members 20A to 20D. The plate-shaped members are fastened by a plurality of bolts 22. When the static pressure gas bearing 10 is assembled, a fine adjustment is required to fasten the plate-shaped members such that a desired gap is formed between the guide shaft 12 and an inner surface of the slider 20.

A plurality of air pads 30 are formed on an inner surface of each of the plate-shaped members 20A to 20D, that is, a surface facing the guide shaft 12. A high-pressure gas supplied from an air supply system (not shown) is ejected from the air pads 30, and a high-pressure gas layer is formed in a minute gap between the guide shaft 12 and the air pads 30 to float the slider 20 from the guide shaft 12.

Exhaust grooves 34 and 36 for differential exhaust are formed on both ends of each of the plate-shaped members 20A to 20D to surround the plurality of air pads 30. The exhaust grooves 34 and 36 are connected to an exhaust pump (not shown) and gas in an internal space of the slider 20 is exhaust to the outside through the exhaust grooves 34 and 36. Accordingly, a compressed gas does not leak from the gap between the guide shaft 12 and the slider 20, and thus, a decrease in a degree of vacuum inside the vacuum chamber is prevented. In addition, a structure of the slider is well known, and thus, in the present specification, further detail descriptions thereof will be omitted.

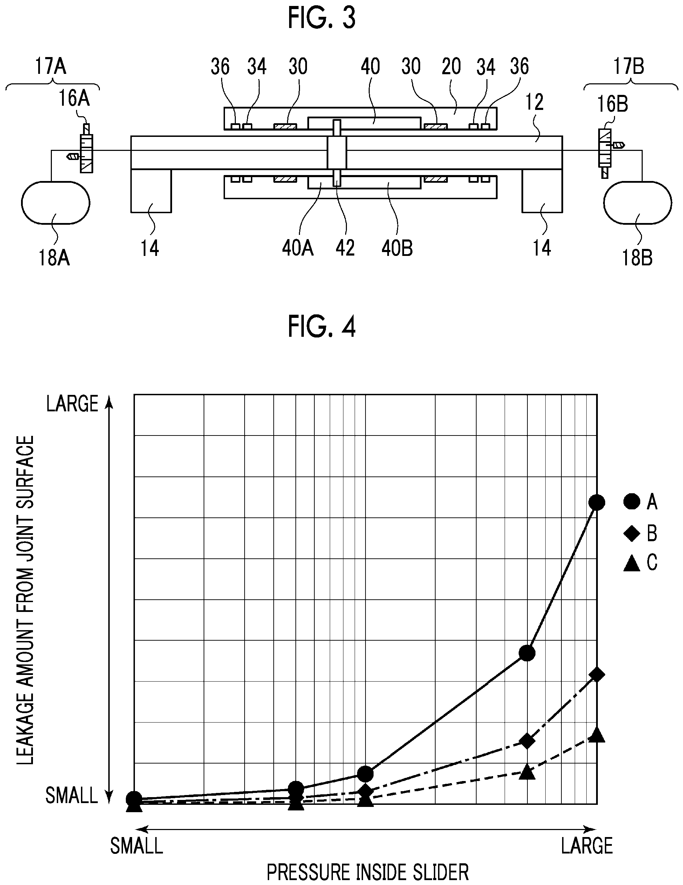

Fig. 3 is a view explaining an operation principle of a gas pressure actuator incorporating the static pressure gas bearing 10. As shown in Fig. 3, a partition wall 42 which partitions an air servo chamber 40 formed inside the slider 20 into two servo chambers 40A and 40B in an axial direction is fixed to the guide shaft 12. Air supply systems 17A and 17B are respectively connected to the two servo chambers 40A and 40B such that the compressed gas can enter or exit from each servo chamber. The air supply systems 17A and 17B include servo valves 16A and 16B and compressed gas supply sources 18A and 18B, respectively.

If compressed air is supplied to air pads 30, the slider 20 slightly floats with respect to the guide shaft 12. Here, for example, if compressed air is supplied to the servo chamber 40A and compressed air is discharged from the servo chamber 40B, the partition wall 42 functions as a piston to move the slider 20 in the left direction of Fig. 3. In this way, it is possible to move the slider 20 to an arbitrary position with respect to the guide shaft 12 by controlling opening degrees of the servo valves 16A and 16B. The operation principle of the gas pressure actuator is known, and thus, further detail descriptions are omitted in the present specification.

Returning to Fig. 2, ceramics which is a material of each plate-shaped member configuring the slider 20 has high hardness, and thus, it is not possible to process the joint surface of the plate-shaped member to a completely smooth surface due to problems of processing accuracy and processing cost. Accordingly, as shown by arrows in Fig. 2, leakage of gas from the inside of the slider 20 to the outside is generated from the joint surface of the plate-shaped member. If a leakage amount of gas increases, the degree of vacuum in the vacuum chamber decreases, and thus, it is not possible to secure a predetermined degree of vacuum.

Therefore, in the present embodiment, films 24 formed of a soft material having a smaller elastic modulus than that of the material of the plate-shaped member are interposed between the joint surfaces of the plate-shaped members 20A to 20D configuring the slider 20. Accordingly, when the plate-shaped members are fastened by the bolts 22, the films 24 of the joint surfaces collapse to fill minute unevenness of the joint surfaces, and thus, it is possible to decrease the leakage amount of the gas from the joint surfaces. Preferably, for example, the film 24 formed by vapor deposition of aluminum. It is possible to easily form the film on the joint surface using the vapor deposition.

Moreover, the material of the film is not limited to aluminum as long as the material of the film is a soft material having a smaller elastic modulus than that of the material (ceramics in the present embodiment) of the slider and can form a uniform film on the joint surface. In addition, the film may be formed by a method other than the vapor deposition. For example, the film may be formed on the joint surface of the plate-shaped member by vapor deposition of titanium or zinc plating, or an aluminum thin film, a resin sheet, or the like may be interposed between the joint surfaces of the plate-shaped members.

### (Example)

In order to confirm effects of the above-described embodiment, a test was conducted to compare leakage amounts from the joint surfaces of plate-shaped members of the slider with respect to three types of specimens A to C. Specimen A was a slider assembled by fastening only bolts. Specimen B was a slider which had a small surface roughness of the joint surface of the plate-shaped member compared to that of the Specimen A and was assembled by fastening only bolts. Specimen C was a slider which had the same surface roughness of the joint surface of the plate-shaped member as that of the Specimen B and was assembled by fastening bolts after an aluminum vapor-deposition film was formed on the joint surface.

In the test, the static pressure gas bearing 10 configured as described above was installed inside a vacuum chamber and a leakage amount of air from the joint surface of the plate-shaped member was measured when compressed air was applied to the internal space of the slider 20.

Fig. 4 is a graph showing the test results. A horizontal axis of the graph indicates an air pressure in the internal space of the slider, and a vertical axis of the graph indicates the leakage amount of the air from the joint surface of the plate-shaped member of the slider. As can be understood from Fig. 4, compared to Specimens A and B assembled by fastening only bolts, in Specimen C in which the vapor deposition of aluminum was applied to the joint surfaces of the plate-shaped members, it was confirmed that the leakage amounts from the joint surface were largely decreased.

In addition, after the sliders were assembled, the bolts were loosened, and similar tests were performed on the sliders in which the bolts were tightened again. Similarly to Fig. 4, also in this case, compared to Specimens A and B, in Specimen C in which the vapor deposition of aluminum was applied to the joint surfaces of the plate-shaped members, it was confirmed that the leakage amounts from the joint surface were largely decreased.

As described above, according to the present embodiment, the film formed of a soft material having a smaller elastic modulus than that of the material of the plate-shaped member is interposed between the joint surfaces of the plate-shaped members configuring the slider. Accordingly, when the plate-shaped members are fastened to each other, the film which is softer than the plate-shaped member collapses to fill the gap of the joint surface, and thus, it is possible to decrease or prevent leakage of gas from the joint surface by only fastening without using an adhesive, a solvent, or the like.

Since an adhesive is not used, even after the slider is assembled, it is possible to disassemble and reassemble the slider for maintenance or adjustment. Moreover, since a solvent is not used, it is possible to avoid problems such as decreases in sealing effects caused by aged deterioration of the solvent or occurrence of fine dust.

Hereinbefore, the configuration of the static pressure gas bearing according to the embodiment is described. It is to be understood by a person skilled in the art that the present embodiment is only an example, various modification examples can be applied to combinations of the components, and the modification examples are also within the scope of the present invention defined by the appended claims.

In the embodiment, the static pressure gas bearing is formed of a nonmagnetic material, particularly, ceramics. However, the present invention can be applied to a static pressure gas bearing formed of a magnetic material.

In the embodiment, each of the guide shaft and the slider of the static pressure gas bearing has a rectangular cross-sectional shape. However, the present invention can be applied to a static pressure gas bearing having a guide shaft and a slider having arbitrary cross-sectional shapes.

The embodiment describes the gas pressure actuator into which the static pressure gas bearing is incorporated. However, the present invention can be applied to an arbitrary static pressure gas bearing regardless of presence or absence of an actuator.

### Industrial Applicability

According to the present invention, in a static pressure gas bearing used in a vacuum environment, it is possible to decrease or prevent leakage of gas from a joint surface of plate-shaped members configuring a slider.

### Reference Signs List

10: static pressure gas bearing, 12: guide shaft, 20: slider, 20A to 20D: plate-shaped member, 22: bolt, 24: film

## Claims

1. A static pressure gas bearing which is used in a vacuum environment, comprising:
a guide shaft (12) and
a tubular slider (20) which is movable in an axial direction in a state where the guide shaft is accommodated therein,
wherein the slider is configured by fastening a plurality of plate-shaped members ((20A, 20B, 20C, 20D), **characterized in that** a film formed of a soft material having a smaller elastic modulus than that of each of the plate-shaped members is interposed between joint surfaces of the plate-shaped members,
the film is formed by vapor deposition of aluminum, the plate-shaped members are fastened by bolts (22) and the films (24) of the joint surfaces are collapsed to fill minute unevenness of the joint surfaces.

2. The static pressure gas bearing according to claim 1, wherein the plate-shaped members are formed of ceramics.

## Patentansprüche

1. Gaslager mit statischem Druck, das in einer Unterdruckumgebung verwendet wird, umfassend:
ein Führungsschaft (12) und
einen rohrförmigen Gleiter (20), der in einem Zustand, in dem der Führungsschaft darin aufgenommen ist, in axialer Richtung beweglich ist,
wobei der Gleiter durch Befestigen mehrerer plattenförmiger Elemente (20A, 20B, 20C, 20D) konfiguriert ist,
**dadurch gekennzeichnet, dass**
zwischen Verbindungsoberflächen der plattenförmigen Elemente eine Schicht eingefügt ist, die aus einem weichen Material gebildet ist, das einen kleineren Elastizitätsmodul als jener jedes der plattenförmigen Elemente besitzt, und
die Schicht durch Abscheidung von Aluminium aus der Dampfphase gebildet ist, die plattenförmigen Elemente durch Schraubbolzen (22) befestigt sind und die Schichten (24) der Verbindungsoberflächen zusammengedrückt sind, um kleine Unebenheiten der Verbindungsoberflächen zu füllen.

2. Gaslager mit statischem Druck nach Anspruch 1,
wobei die plattenförmigen Elemente aus Keramik gebildet sind.

## Revendications

1. Un palier à gaz à pression statique qui est utilisé dans un environnement sous vide, comprenant :
un arbre de guidage (12), et
une glissière tubulaire (20) qui est mobile dans une direction axiale dans un état dans lequel l'arbre de guidage est logé à l'intérieur de cette dernière,
dans lequel la glissière est configurée en fixant une pluralité d'éléments en forme de plaque (20A, 20B, 20C, 20D),
**caractérisé en ce que** :
un film formé avec un matériau souple ayant un plus petit module d'élasticité que celui de chacun des éléments en forme de plaque, est intercalé entre des surfaces de joint des éléments en forme de plaque,
le film est formé par dépôt d'aluminium en phase vapeur, les éléments en forme de plaque sont fixés par des boulons (22) et les films (24) des surfaces de joint sont repliés pour remplir une minuscule irrégularité des surfaces de joint.

2. Le palier à gaz à pression statique selon la revendication 1,
dans lequel les éléments en forme de plaque sont formés à partir de céramique.
